# EUROPEAN PATENT SPECIFICATION

(11) **EP 2 968 047 B1**
(45) Date of publication and mention of the grant of the patent: **30.05.2018**
(21) Application number: 14770704.6
(22) Date of filing: 14.03.2014
(51) Int. Cl.: A61G 7/16, A61G 7/05, A61G 7/14, F16K 11/00

(54) **PATIENT SUPPORT APPARATUS AND METHOD**
PATIENTENTRAGEVORRICHTUNG UND -VERFAHREN
APPAREIL ET PROCEDE DE SUPPORT DE PATIENT

(30) Priority: 14.03.2013 US 201361782765 P
(43) Date of publication of application: 20.01.2016
(60) Divisional application: 18162147.5
(73) Proprietor: Kap Medical, Inc., Corona, CA 92881 (US)
(72) Inventor: GOWDA, Raj, K., Corona, CA 92883 (US); MELGAR, Fidel, Riverside, CA 92501 (US); LEWIS, David, Darwin, Yorbalinda, CA 92886 (US)
(74) Representative: Dauncey, Mark Peter
(86) International application number: PCT/US2014/029034
(87) International publication number: WO 2014/153095

(56) References cited:
- EP-A2- 2 060 836
- WO-A1-00/09064
- WO-A1-98/22071
- US-A- 4 768 249
- US-A- 5 023 967
- US-A1- 2004 031 103
- US-A1- 2010 063 638
- US-A1- 2012 105 233
- US-B1- 6 253 402
- US-B2- 7 007 330
- US-B2- 7 641 623

## Description

### RELATED APPLICATION

### FIELD

The disclosure relates in general to patient supports and, more particularly, to patient supports including at least one inflatable bladder controlled by a valve.

### BACKGROUND

Patient supports are known. Such patient supports are constructed of inflatable bladders, foam, combination of air and foam, and other materials. Some patient supports provide therapy for pulmonary conditions. US6253402B1 relates to an airbed structure wherein the airbed structure is divided into an upper and a lower layer each layer comprising an air bladder. US2004/031103A1 relates to a mattress assembly comprising a mattress including a plurality of cylinders positioned side by side over the length of the mattress. WO00/09064A1 relates to an inflatable patient support system including transverse partition members and a raised perimeter section. WO98/22071A1 relates to a bariatric patient bed for monitoring and/or controlling therapeutic mattress systems and the patient supported on them.

### BRIEF DESCRIPTION OF THE DRAWINGS

The above-mentioned and other features and advantages of this disclosure, and the manner of attaining them, will become more apparent and the invention itself, as defined by claim 1, will be better understood by reference to the following description of embodiments of the invention taken in conjunction with the accompanying drawings, wherein:
FIG. 1 is a perspective view of an exemplary bed including an exemplary patient support positioned thereon;
FIG. 2 is an exploded assembly view of the patient support of FIG. 1 showing the patient support including a base and a plurality of turn bladders, positioned under the base;

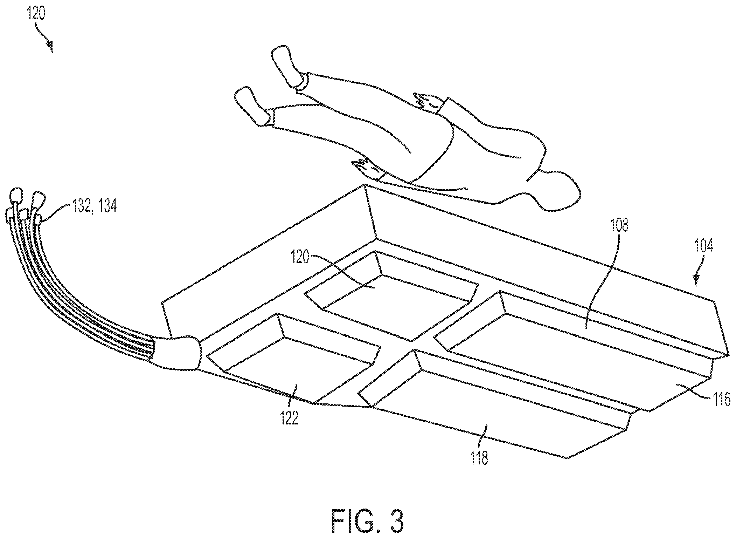

FIG. 3 is perspective view showing an underside of the patient support of FIG. 1
FIG. 4 is an assembly view of a turn valve assembly the patient support of FIG. 1;
FIG. 5 is a top view of a valve body of the valve assembly of FIG. 4;
FIG. 6 is a left side view of the valve body of FIG. 5;
FIG. 7 is a front view of the valve body of FIG. 5;
FIG. 8 is a right side view of the valve body of FIG. 5;
FIG. 9 is side view of a valve of the valve assembly;
FIG. 10 is a front view of the valve of FIG. 9;
FIG. 11 is a side view of handle cover of the valve assembly of FIG. 5;
FIG. 12 is a front view of the handle cover of FIG. 11;
FIG. 13 is a side elevation view of the valve body and valve in a first position relative to the valve body wherein the valve assembly vents the turn bladders to atmosphere;
FIG. 14 is a view similar to FIG. 13 showing the valve in a second position relative to the valve body wherein the turn bladders are sealed from atmosphere;
FIG. 15 is a view similar to FIG. 13 showing the valve in a third position relative to the valve body wherein a right turn bladder is in communication with a source of pressurized air to inflate the right turn bladder;
FIG. 16 is a view similar to FIG. 13 showing the valve in a fourth position relative to the valve body wherein a left torso turn bladder is in communication with a source of pressurized air to inflate the left torso turn bladder;
FIG. 17 is a view similar to FIG. 13 showing the valve in a fifth position relative to the valve body wherein the right and left torso turn bladders are in communication with a source of pressurized air to inflate the right and left torso turn bladders;
FIG. 18 is a view similar to FIG. 13 showing the valve in a sixth position relative to the valve body wherein the right and left torso turn bladders and right and left foot bladders are in communication with a source of pressurized air to inflate the right and left torso turn bladders and the right and left foot bladders;
FIG. 19 is a perspective view of a heel valve assembly of the patient support of FIG. 1;
FIG. 20 is front view of the heel valve assembly of FIG. 19;
FIG. 21 is an assembly view of the heel valve assembly of FIG. 19;
FIG. 22 a right side view of the heel valve body of the heel valve assembly of FIG. 19;
FIG. 23 a front view of the heel valve body of FIG. 22;
FIG. 24 is a left side view of the heel valve body of FIG. 22;
FIG. 25 is a back view of the heel valve body of FIG. 22;
FIG. 26 is a front side view of a heel valve of the heel valve assembly of FIG. 19;
FIG. 27 is a back side view of the heel valve of FIG. 26;
FIG. 28 illustrates a patient support and valve assembly;
FIG. 29 is a front view of a valve body of the valve assembly of FIG. 28;
FIG. 30 is a back view of the valve body of FIG. 29;
FIG. 31 is a front view of an assembly of a handle cover and valve of the valve assembly of FIG. 28;
FIG. 32 is a back view of the assembly of FIG. 31;
FIG. 33 is a front view of the valve body of FIG. 29 with the locations of fluid channels in the valve of the valve assembly rotated to a first position;
FIG. 34 is a front view of the valve body of FIG. 29 with the locations of fluid channels in the valve of the valve assembly rotated to a second position;
FIG. 35 is a front view of the valve body of FIG. 29 with the locations of fluid channels in the valve of the valve assembly rotated to a third position; and
FIG. 36 is a front view of the valve body of FIG. 29 with the locations of fluid channels in the valve of the valve assembly rotated to a fourth position.

Corresponding reference characters indicate corresponding parts throughout the several views. The exemplifications set out herein illustrate exemplary embodiments of the invention and such exemplifications are not to be construed as limiting the scope of the invention in any manner.

### DETAILED DESCRIPTION OF THE DRAWINGS

The embodiments disclosed herein are not intended to be exhaustive or to limit the invention to the precise forms disclosed in the following detailed description. Rather, the embodiments are chosen and described so that others skilled in the art may utilize their teachings.

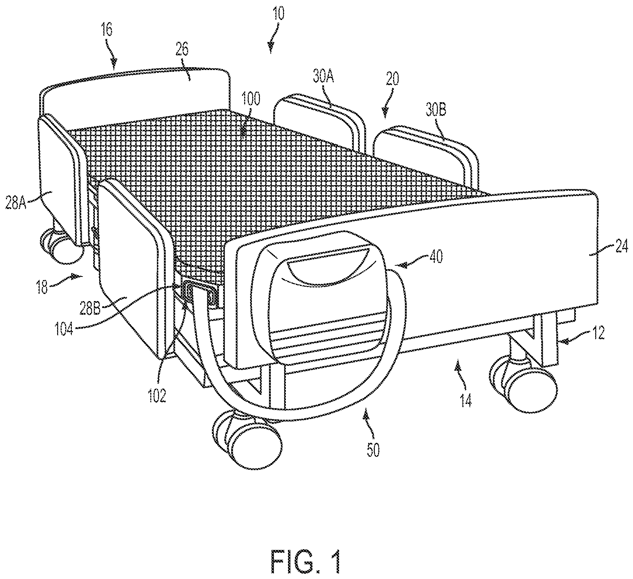

Referring to FIG. 1, an exemplary bed 10 is shown. Bed 10 includes a bed frame 12. The bed frame 12 having a foot end 14, a head end 16, a first side 18 and a second side 20. A footboard 24 is positioned at the foot end 14 of the bed frame 12. A headboard is positioned at at the head end 16 of bed frame 12. A plurality of side barriers 28A and 28B are positioned along the first side 18 of bed frame 12. A plurality of side barriers 30A and 30B are positioned along the second side 20 of bed frame 12. Exemplary side barriers include side rails and other exemplary members to prevent egress of a patient.

A patient support 100 is supported on bed frame 12. As shown in FIG. 1, patient support 100 is positioned between side barriers 28 and side barriers 30 and between footboard 24 and headboard 26. A fluid supply unit 40 is also supported by bed frame 12. Fluid supply unit 40 interacts with one or more components of patient support 100 through an interface 102. Fluid supply unit 40 may be separated from patient support 100.

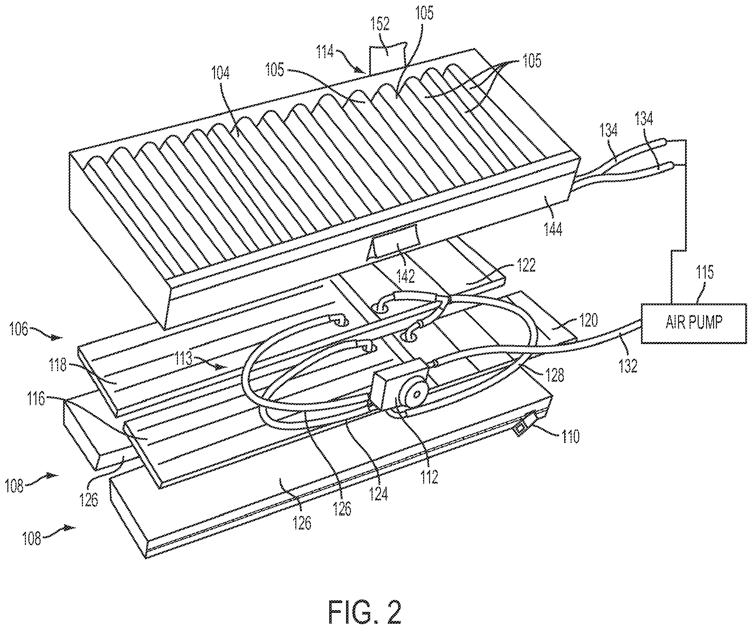

As shown in FIG. 2, patient support 100 includes a base support surface 104 having a plurality of heel bladders 105, a plurality of turn bladders 106, and a pair of turn bladder covers 108 that are attached to base support surface 104 with a zipper 110 or other form of attachment, such as hook-and-loop type fasteners, snaps, stitching, etc. Additional details of suitable base support surfaces 104 are provided in US Provisional Patent Application Serial No. 61/713,856, titled PATIENT SUPPORT APPARATUS AND METHOD, to Rosenmayer et al., filed October 15, 2012; US Patent No. 7,454,809, titled METHOD FOR USING INFLATABLE CUSHION CELL WITH DIAGONAL SEAL STRUCTURE, filed on December 26, 2006; US Patent No. 8,220,090, titled MULTI-CHAMBER AIR DISTRIBUTION SUPPORT SURFACE PRODUCT AND METHOD, to Gowda, filed October 26, 2006.

Turn bladders 108 are inflated and deflated depending on the needs of the patient, a caregiver, and/or base support surface 104. For example, certain of bladders 108 can be alternated between inflated and deflated states to alternatively turn a patient on their right or left sides for alternating rotation therapy. To assist a caregiver in turning a patient, the right side or left side bladder may be inflated as the respective left side or right side bladders are deflated to partial turn a patient over. To facilitate the use of base support surface 104 for use on a bed frame 12 having a recessed deck, bladders 108 may be inflated to raise base support surface 104. To facilitate the use of base support surface 104 for use in a bed frame 12 with a flat deck, bladders 108 may remain deflated during normal use so that base support surface 104 is not raised.

Patient support 100 includes a turn valve assembly 112 that controls the inflation and deflation of bladders 108, a heel valve 114 that controls the inflation and deflation of bladders 105 positioned under the heels of a patient, and a plurality of tubes 113 that connect valve assembly 112 to air pump 115 of air supply unit 40 and bladders 108. Plurality of bladders bladders 108 includes a right torso turn bladder 116, a left torso turn bladder 118, a right foot bladder 120, and a left foot bladder 122. Right and left torso turn bladders 116, 118 preferably include a plurality of longitudinally extending gussets to control the inflated height thereof. Similarly, right and left foot bladders 120, 122 preferably include a plurality of laterally extending gussets to control the inflated height thereof.

Plurality of tubes 113 includes right torso tube 124 extending between valve assembly 112 and right torso turn bladder 116, left torso tube 126 extending between valve assembly 112 and left torso turn bladder 118, right and left foot tube 128 extending between valve assembly 112 and right and left foot bladders 120, 122, and air pump tube 132 extending between air pump 115 and valve assembly 112. Air pump 115 may also provide pressurized air to base support surface 104 through support surface tubes 134.

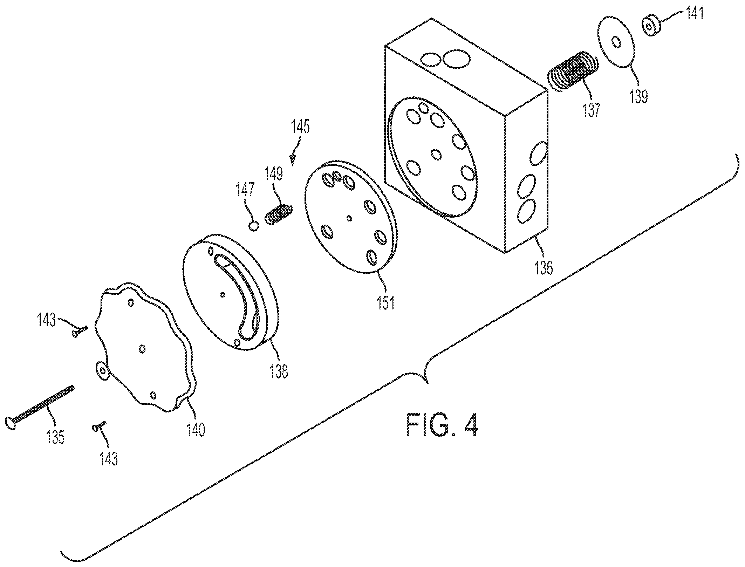

As shown in FIG. 4, turn valve assembly 112 includes a valve body 136, a valve 138, and a handle cover 140 that covers valve 138 and is used as a handle to turn valve 138 relative to valve body 136 to control the ingress and egress of air to and from bladders 108. Valve assembly 112 is positioned behind a flap 142 (see FIG. 1) formed in a cover 144 of base support surface 104 so that cover handle 140 is accessible by lifting flap 142.

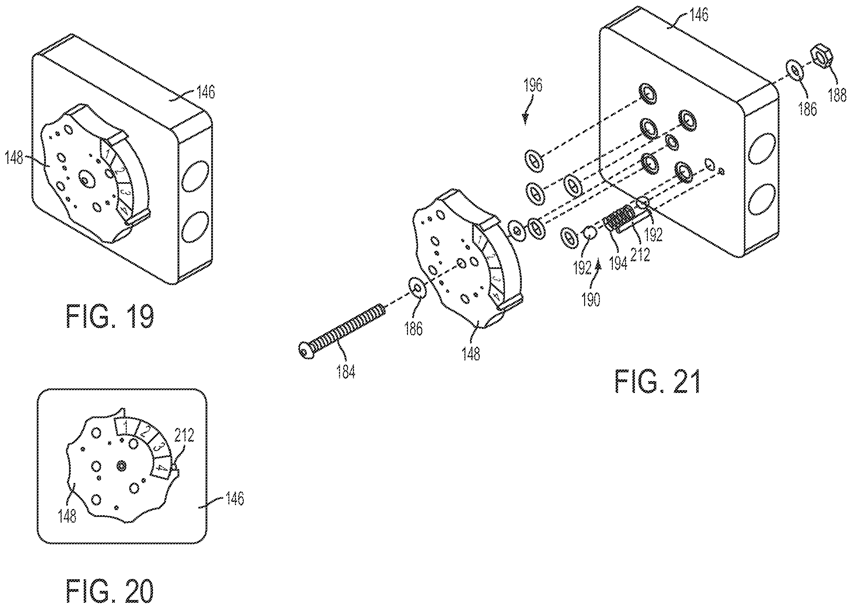

As shown in FIG. 21, heel valve assembly 114 includes a valve body 146 and a valve 148 that is turned relative to valve body 146 to control the egress of air from heel bladder 148 positioned under a patient's heels. Heel valve assembly 114 is positioned behind a flap 152 (see FIG. 1) formed in cover 144 so that valve 148 of heel valve assembly 114 is accessible by lifting flap 152.

Referring again to FIG. 4, turn valve assembly 112 further includes a central bolt 135, spring 137, washer 139, and nut 141 that couple valve body 136, valve 138, and handle cover 140 together. Fasteners 143, such as screws, further couple handle cover 140 to valve 138. A ball detent 145 including a ball 147 and spring 149 is provided to index valve 138 into one or more of the several positions that are discussed in greater detail below. Turn valve assembly 112 also includes a seal or gasket 151 to seal the various apertures also discussed in greater detail below.

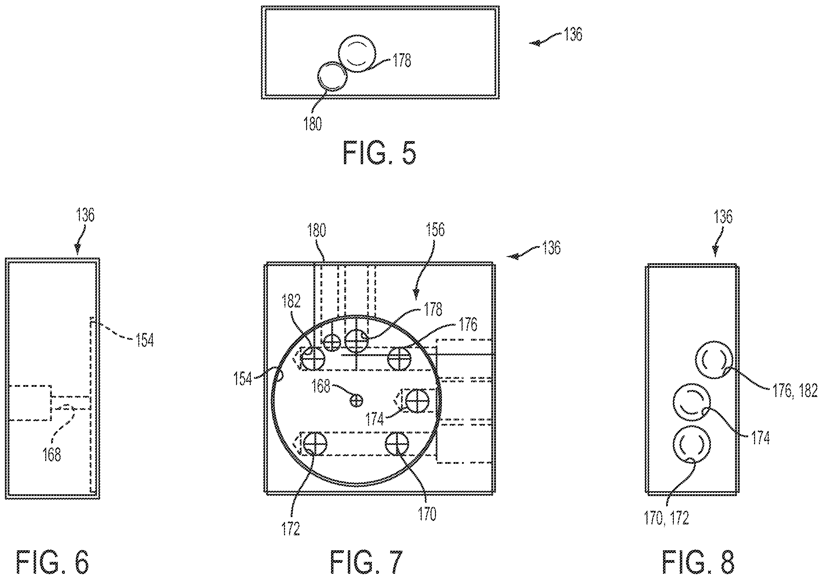

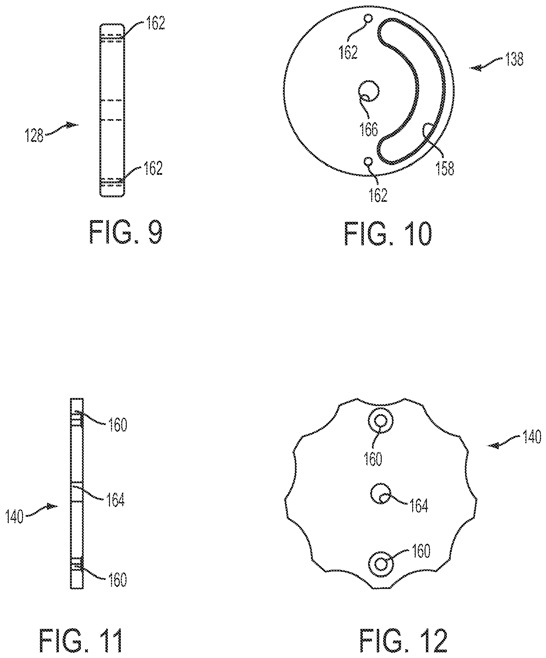

As shown in FIG. 7, valve body 136 of turn valve assembly 112 includes a circular recess 154 sized to receive valve 138 and a plurality of apertures 156 that communicate with plurality of tubes 113. As shown in FIG. 10, valve 138 includes a C-shaped slot 158 that aligns with two or more of apertures 156 to communicate air to and from tubes 113. As shown in FIGS. 11 and 12, handle cover 140 includes a pair of apertures 160 that align with apertures 162 in valve 138 through which fasteners 143 are positioned to couple valve 138 and handle cover 140 together. Sealant or other material may be placed between valve 138 and handle cover 140 to prevent air from leaking therebetween. Similarly, handle cover 140 includes a central aperture 164 that aligns with a central aperture 166 in valve 138 and a central aperture 168 of valve body 136 through which central bolt 135 is positioned to couple handle cover 140, valve 138, and valve body 136 together. Gasket 151 is positioned between valve 138 and valve body 136 to reduce or prevent air from leaking therebetween.

As shown in FIGS. 5-8, plurality of apertures 156 in valve body 136 include a pair of air pump apertures 170, 172 that communicate with air pump tube 132, a right turn aperture 174 that communicates with right torso tube 124, a first left turn aperture 176 that communicates with left torso tube 126, a right and left foot aperture 178 that communicates with right and left foot tube 128, a vent aperture 180 that communicates with atmosphere, and a second left turn aperture 182 that communicates with left torso tube 126. If desired, the locations of right and left torso tubes 124, 126 may be switched.

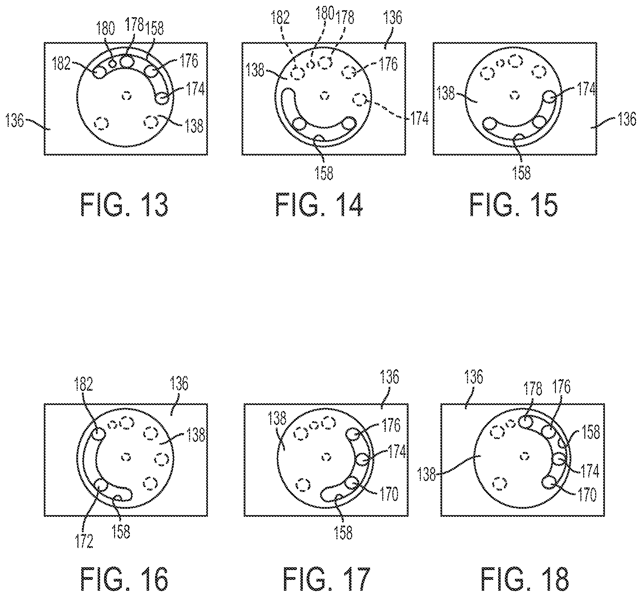

When valve 138 is rotated to the position shown in FIG. 13, right turn aperture 174, first left turn aperture 176, right and left foot aperture 178, vent aperture 180, and second left turn aperture 182 all communicate with C-shaped slot 158 so that right and left turn bladders 116, 118 and right and left foot bladders 120, 122 all deflate. This state may be preferable when patient support 100 is positioned on a bed frame 12 that does not include a recessed deck.

When valve 138 is rotated to the position shown in FIG. 14, right turn aperture 174, first left turn aperture 176, right and left foot aperture 178, vent aperture 180, and second left turn aperture 182 are not in communicate with C-shaped slot 158 so that right and left turn bladders 116, 118 and right and left foot bladders 120, 122 remain in their last state of either deflation or inflation. This state is preferable when it is desirable to maintain patient support is its last inflated state.

When valve 138 is rotated to the position shown in FIG. 15, right turn aperture 174 and first and second air pump apertures 170, 172 are in communicate with C-shaped slot 158 so that right turn bladder 116 inflates. This state is preferably when it is desirable to turn a patient on their left side during rotational therapy or for assisting a caregiver in turning a patient on their left side.

When valve 138 is rotated to the position shown in FIG. 16, second left turn aperture 182 and second air pump aperture 172 are in communicate with C-shaped slot 158 so that left turn bladder 118 inflates. This state is preferably when it is desirable to turn a patient on their right side during rotational therapy or for assisting a caregiver in turning a patient on their right side.

When valve 138 is rotated to the position shown in FIG. 17, right turn aperture 174, first left turn aperture 176 and first air pump aperture 170 are in communicate with C-shaped slot 158 so that right and left turn bladders 116, 118 inflate. This state is preferable when it is desirable to raise the torso of a patient or to occupy the recess of a bed frame 12 having a recessed torso portion deck to facilitate the use of standard patient supports (i.e. a non-recessed deck patient support).

When valve 138 is rotated to the position shown in FIG. 18, right turn aperture 174, first left turn aperture 176, right and left foot aperture 178 and first air pump aperture 170 all communicate with C-shaped slot 158 so that right and left turn bladders 116, 118 and right and left foot bladders 120, 122 all inflate. This state is preferable when it is desirable to raise the all of patient or to occupy the recess of a bed frame 12 having a recessed torso and foot deck portions to facilitate the use of standard patient supports (i.e. a non-recessed deck patient support).

Referring now to FIG. 21, heel valve assembly 114 further includes a central bolt 184, washers 186, and nut 188 that couple valve body 146 and valve 148. A ball detent 190 including balls 192 and spring 194 are provided to index valve 148 into one or more of the several positions that are discussed in greater detail below. Turn valve assembly 114 also includes O-Rings 196 to seal the various apertures also discussed in greater detail below.

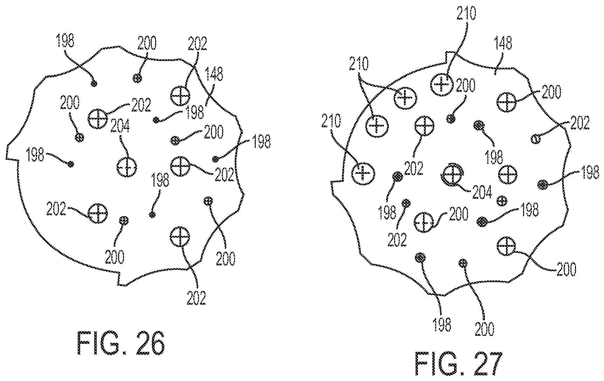

As shown in FIGS. 26 and 27, valve 148 includes three sets of small apertures 198, medium apertures 200, and large apertures 202. Each set of small, medium, and large apertures 198, 200, 202 are spaced apart by 120° about a central aperture 204. Depending on the the relative position of valve 148 to valve body 146, small, medium, or large apertures 198, 200, 202 align with apertures 206 in valve body 146 to communicate air from heel bladders 105 to control the release of air from heel bladders 105. Central aperture 204 in valve 148 and a central central aperture 208 of valve body 136 align and central bolt 184 is positioned therein to couple valve 148 and valve body 146 together. O-Rings 196 are positioned between valve 148 and valve body 146 to reduce or prevent air from leaking therebetween.

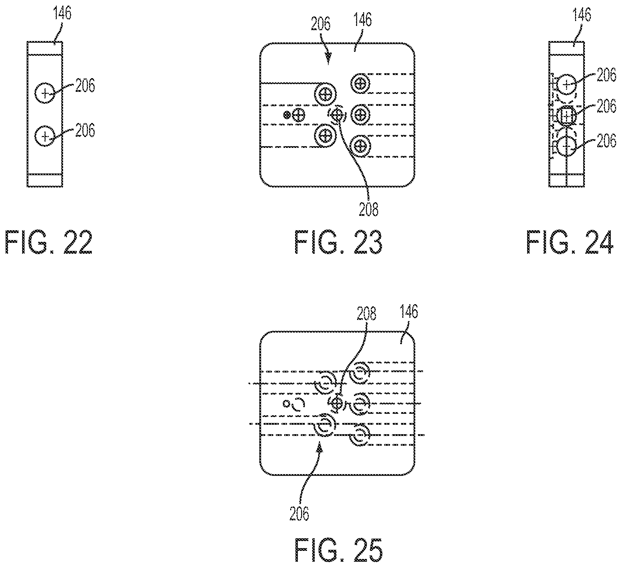

As shown in FIGS. 22-25, plurality of apertures 156 includes five apertures 206 each of which communicate with a separate heel bladder 105 positioned at a foot end of patient support 100 through tubes (not shown) extending between apertures 206 and heel bladders 105. Depending on the relative position of valve 148 to valve body 146, these apertures 206 align with small, medium, and large apertures 198, 200, 202 to allow bleeding or venting of air from heel bladders 105 or they are sealed off to prevent bleeding or venting through heel valve assembly 114. Valve 148 include four detent apertures 210 that receive one of balls 192 to index valve 148 into one of four positions discussed in greater detail below. A post 212 is positioned in valve body 146 to limit the rotation of valve 148 relative to valve body 146. Additionally, post 212 aligns with one of four indicia on valve 148 to indicate a position of valve 148 relative to valve body 146.

In certain circumstances, it may be desirable to reduce the amount of pressure applied to a patient's heels by heel bladders 105. Normally, air supply unit 40 maintains pressure in heel bladders 105 at a predetermined level. On occasion, it may be desirable to permit air to bleed from heel bladders 105 to lower the pressure therein and to allow less pressure to be applied to a patient's heels to help prevent or reduce decubitus ulcers. According to the present disclosure, valve 148 is rotated to one of four positions to control the bleed rate from heel bladders 105.

When a maximum bleed rate is desired, a caregiver rotates valve 148 to the position (position four) shown in FIGS. 19-21 so that apertures 206 align with large apertures 202. When an intermediate bleed rate is desired, a caregiver rotates valve 148 to position three so that apertures 206 align with medium apertures 200. When a minimum bleed rate is desired, a a caregiver rotates valve 148 to position two so that apertures 206 align with small apertures 198. When no bleed is desired, a caregiver rotates valve 148 to position one so that apertures 206 do not align with any of small, medium, or large apertures 198, 200, 202 so that O-rings 196 seal against valve 148 and block all or substantially all bleeding.

Although turn valve assembly 112 and heel valve assembly 114 are manual operated according to the preferred embodiment of the present disclosure, they may be operated by a motor set or other powered device. For example, a motor set may be provided to turn respective valves 138, 148 and a controller may be provided to control the motor set. Such a controller may include a processor and inputs such as a user interface (buttons, switches, touchscreen, etc.) to receive a desired position from a caregiver and feed back (potentiometer, etc.) to provide an indication of the position of respective valves 138, 148 to the processor.

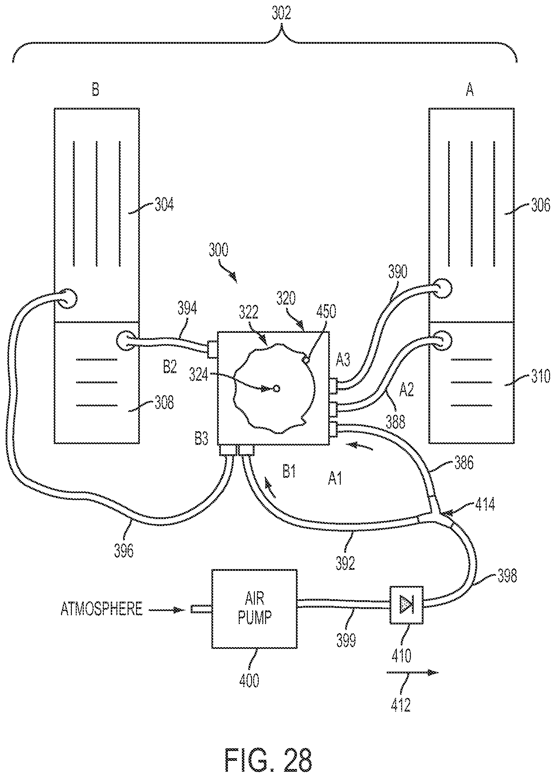

Referring to FIG. 28, a valve assembly 300 for a patient support 302 is illustrated. In the illustrated embodiment, patient support 302 includes a plurality of bladders 304-310. Bladders 304-310 each have an interior region which may be inflated or deflated. Bladders 304-310 are individually inflatable and deflatable. Bladders 304-310 may be separate bladders that can be moved relative to each other or mechanically joined together through fasteners, a shared seam, and/or positioned within a common cover. In one embodiment, a portion of the bladders 304-310 are main bladders for a patient support and a second portion of the bladders 304-310 are selectively inflatable to widen or lengthen the patient support. In one embodiment, bladders 304-310 correspond to bladders 116-122 (see FIGS. 1 and 2), respectively. Although four bladders are illustrated, more or fewer bladders may be included.

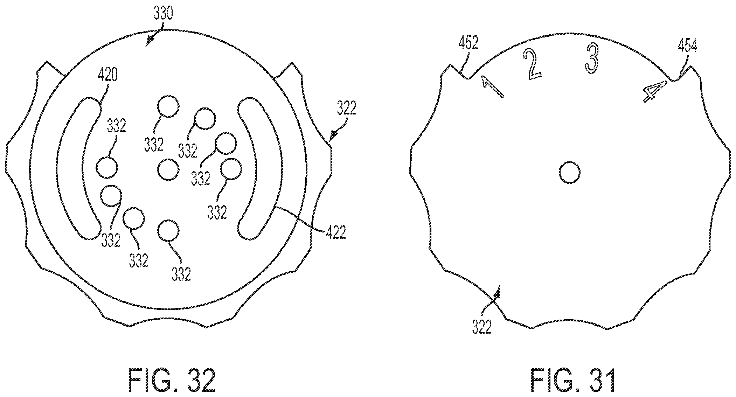

As shown in FIG. 28, valve assembly 300 includes a valve body 320, a valve 330 (see FIG. 32), and a handle cover 322 that covers valve 330 and is used as a handle to turn valve 330 relative to valve body 320 to control the ingress and egress of air to and from bladders 304-310.

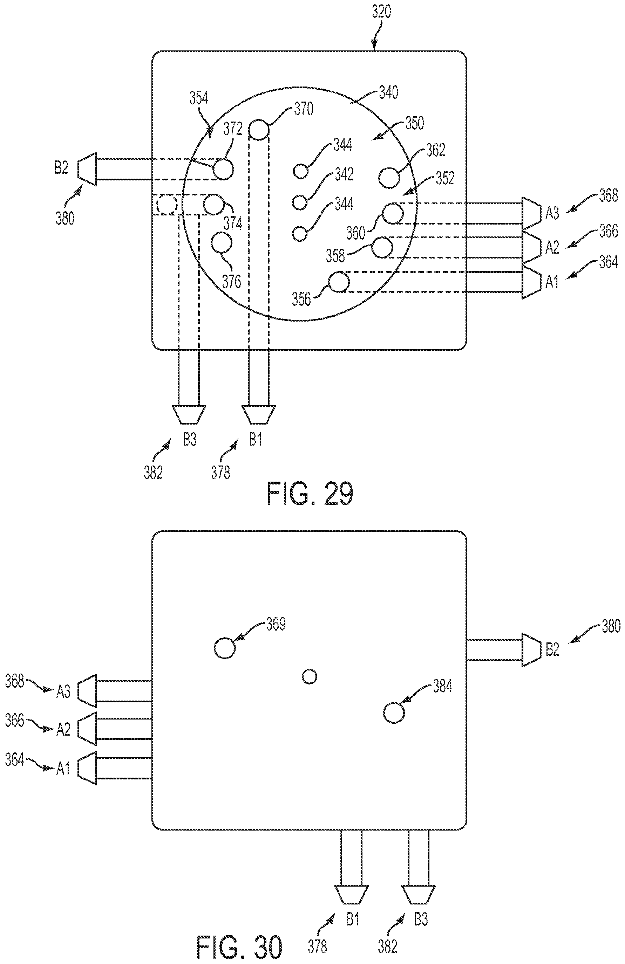

Referring to FIG. 29, valve body 320 includes a recess 340 which receives valve 330. Valve body 320 further includes a central fastener opening 342 and recesses 344. Recesses Recesses 344 include a respective spring (see spring 149 of FIG. 4) and ball detent (see ball detent 147 of FIG. 4). The ball detents are received in respective recesses 332 of valve 330 to index valve 330 into one or more of the several positions relative to valve body 320 that are discussed in greater detail below. A fastener 324 is used to hold handle cover 322, valve 330, and valve body 320 together while still permitting the rotation of handle cover 322 and valve 330 relative to valve body 320. An exemplary assembly is provided herein in connection with FIG. 4. In the illustrated embodiment, handle cover 322 and valve 330 are coupled together such that the components rotate together as a group. Further, the interface between handle cover 322 and valve 330 is sealed to prevent air leakage between handle cover 322 and valve 330.

Referring to FIG. 29, valve body 320 includes a plurality of ports 350 located in recess 340 that are each in fluid communication with a plurality of ports through respective fluid conduits within valve body 320. A first portion 352 of the plurality of ports 350 are used to control the inflation and deflation of bladders 306 and 310 and a second portion 354 of the plurality of ports 350 are used to control the inflation and deflation of bladders 304 and 308. As shown in FIG. 29, port 356 is in fluid communication with port 364. Port 364 is in turn in fluid communication with an air pump 400 through fluid conduits 386, 398, and 399. Air pump 400 receives air from atmosphere or another source and provides it to valve body 320 under pressure through fluid conduits 386, 398, and 399. The pressurized air travels through valve body 320 and is communicated to port 356. In a similar fashion, port 370 is in fluid communication with port 378 which in turn is in fluid communication with air pump 400 through fluid conduits 392, 398, and 399. The pressurized air travels through valve body 320 and is communicated to port 370. Ports 356 and 370 serve as air inlets to valve 330.

Ports 358, 360, 362, 372, 374, and 376 serve as air outlets for valve 330 as explained below. Port 358 is in fluid communication with port 366 through valve body 320. Port 366 is in fluid communication with bladder 310 through fluid conduit 388 (See FIG. 28). Port 360 is in fluid communication with port 368 through valve body 320. Port 368 is in fluid communication with bladder 306 through fluid conduit 390 (See FIG. 28). Port 362 is in fluid communication with port 369 through valve body 320. Port 369 is vented to atmosphere (See FIG. 30). Port 372 is in fluid communication with port 380 through valve body 320. Port 380 is in fluid communication with bladder 308 through fluid conduit 394 (See FIG. 28). Port 374 is in fluid communication with port 382 through valve body 320. Port 382 is in fluid communication with bladder 304 through fluid conduit 396 (See FIG. 28). Port 376 is in fluid communication with port 384 through valve body 320. Port 384 is vented to atmosphere (See FIG. 30).

Referring to FIG. 28, fluid conduits 398 and 399 are in fluid communication through a one way valve 410 which permits fluid flow in direction 412. Fluid conduits 386 and 392 are in fluid communication with fluid conduit 398 through a Y-coupling 414. In one embodiment, fluid conduits 386 and 392 each include a respective solenoid valve switchable between a first configuration wherein the respective one of ports 364 and 378 of valve body 320 is in fluid communication with fluid conduit 398 and a second configuration wherein the respective one of ports 364 and 378 of valve body 320 is not in fluid communication with fluid conduit 398. In one example the solenoid valves are individually controlled.

Referring to FIG. 32, valve 330 includes two C-shaped slots 420 and 422 like slots 158 discussed herein. By rotating valve 330 relative to valve body 320, slots 420 and 422 are placed either in fluid communication or not in fluid communication with various combinations of ports 356-362 and 370-376. In the illustrated embodiment, slots 420 and 422 are arranged so that when slot 420 is in fluid communication with port 356, slot 422 is in fluid communication with port 370; when slot 420 is in fluid communication with port 358, slot 422 is in fluid communication with port 372; when slot 420 is in fluid communication with port 360, slot 422 is in fluid communication with port 374; and when slot 420 is in fluid communication with port 362, slot 422 is in fluid communication with port 376. Thus, valve 330 in essence pairs bladders 304 and 306 to inflate/deflate in concert and bladders 308 and 310 to inflate/deflate in concert.

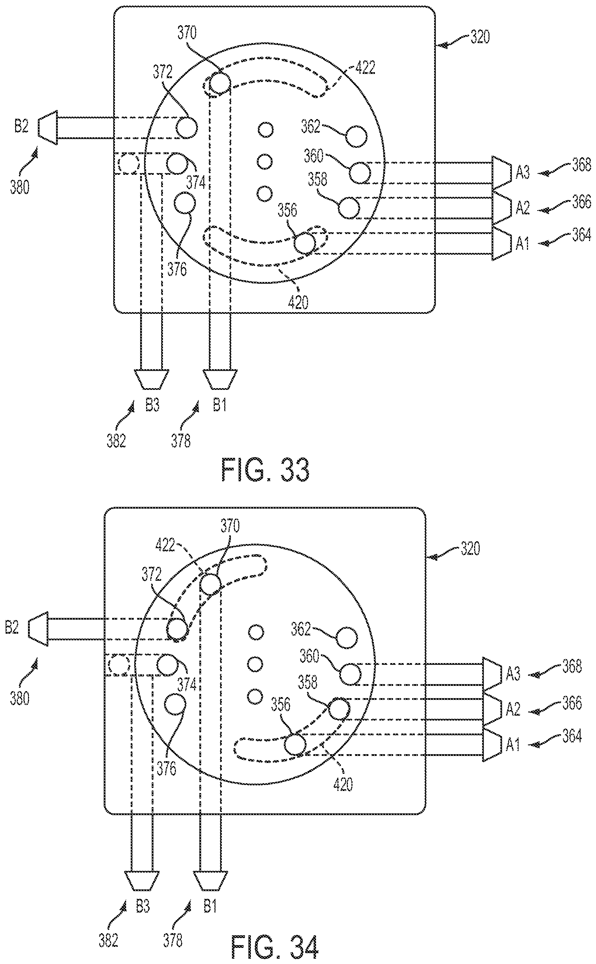

Referring to FIG. 33, in a first position of valve 330 slot 420 is in fluid communication with port 356 and slot 422 is in fluid communication with port 370. Referring to FIG. 34, in a second position of valve 330 slot 420 is in fluid communication with ports 356 and 358 and slot 422 is in fluid communication with ports 370 and 372. In this position air provided through ports 356 and 370 is passed on to ports 358 and 372, respectively to inflate bladders 310 and 308, respectively. In one embodiment, valve 330 is used with bladders 116, 118, 120, and 122 and this state is preferable when it is desirable to raise the torso of a patient or to occupy the recess of a bed frame 12 having a recessed torso portion deck to facilitate the use of standard patient supports (i.e. a non-recessed deck patient support).

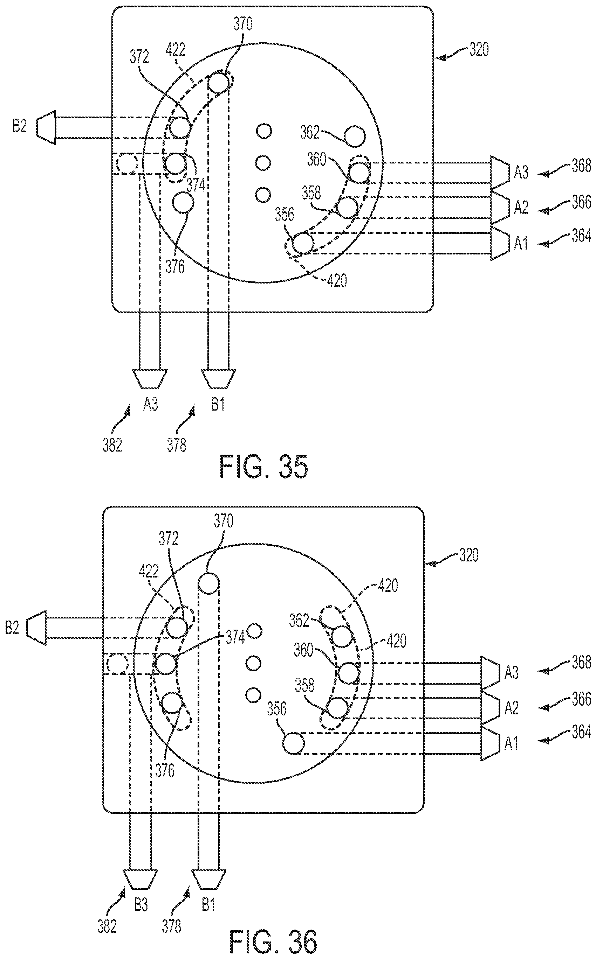

Referring to FIG. 35, in a third position of valve 330 slot 420 is in fluid communication with ports 356, 358, and 360 and slot 422 is in fluid communication with ports 370, 372, and 374. In this position air provided through ports 356 and 370 is passed on to ports 358 and 372, respectively to inflate bladders 310 and 308, respectively, and is passed on to ports 360 and 374, respectively to inflate bladders 306 and 304, respectively. In one embodiment, valve 330 is used with bladders 116, 118, 120, and 122 and this state is preferable when it is desirable to raise the all of patient or to occupy the recess of a bed frame 12 having a recessed torso and foot deck portions to facilitate the use of standard patient supports (i.e. a non-recessed deck patient support).

Referring to FIG. 36, in a fourth position of valve 330 slot 420 is in fluid communication with ports 358, 360, and 362 and slot 422 is in fluid communication with ports 372, 374, and 376. In this position air is received through ports 358 and 360 and is passed on to port 362 to deflate bladders 310 and 306, respectively. Further air is received through ports 372 and 374 and is passed on to port 76 to deflate bladders 308 and 304, respectively.

Referring back to Fig. 28, in one embodiment, valve body includes a pin 450 that limits the rotation of handle cover 322 and hence valve 330 due to interaction between pin 450 and surfaces 452 and 454 (see FIG. 31) of handle cover 322.

Valve assembly 300, as described above includes two sets of ports that are controlled through the rotation of valve 330. The illustrated patient support 302 including valve assembly 300 includes two sets of bladders wherein each set is plumbed to one of the two sets of ports. Thus, the rotation of valve 330 causes the bladders of each set to inflate or deflate in concert. Although two sets of ports and two sets of bladders are illustrated, valve assembly 300 may be modified to include three or more sets of ports to function with patient supports having three or more sets of bladders. Further, the respective sets of ports may having more or fewer ports based on the number of bladders in each set of bladders.

In an exemplary embodiment of the present disclosure a patient support is provided. The patient support comprising a right side bladder having an interior region; a left side bladder having an interior region; and a valve assembly in fluid communication with the interior regions of the right and left side bladders, the valve assembly having a plurality of positions to control the inflation of the right and left bladders.

In an example thereof, the plurality of positions includes a first position with the right side bladder inflated and the left side bladder deflated, a second position with the left side bladder inflated and the right side bladder deflated, a third position with the left and right side bladders inflated, and a fourth position with the right side and left side bladders deflated. In a variation thereof, the patient support further comprises a right foot bladder positioned to support a right lower leg of a patient, and a left foot bladder positioned to support a left lower leg of a patient, wherein the right side bladder is positioned to support a right side of a patient torso and the left side bladder is positioned to support a left side of the patient torso, and the valve assembly includes a fifth position that inflates the right and left side bladders and right and left foot bladders when in a fifth position the valve assembly deflates the right and left foot bladders when in the first, second, third, and fourth positions. In another variation thereof, the valve assembly includes another position maintaining at least one of the inflated or deflated states of the right and left side bladders resulting from the valve assembly previously being in at least one of the first, second, third, and fourth positions.

In another exemplary embodiment of the present disclosure, a patient support is provided. The patient support comprising a plurality of bladders positioned to support a lower leg of a patient, each of the bladders including an interior region, and a valve assembly in fluid communication with the interior region of at least one of the plurality of bladders, the valve assembly having a plurality of positions to control a bleed rate of pressurized fluid from the interior region of the at least one bladder.

In an example thereof, the valve includes a plurality of positions includes a first position blocking the bleed of air from the at least one bladder through the valve assembly and a second position permitting the bleed of air from the at least one bladder. In a variation thereof, the valve assembly includes a third position permitting the bleed of air from the at least one bladder through the valve assembly at a rate greater than when the valve assembly is in the second position. In a refinement thereof, the valve assembly includes a fourth position permitting the bleed of air from the at least one bladder through the valve assembly at a rate greater than when the valve assembly is in the third position.

In a further exemplary embodiment of the present disclosure, a patient support is provided. The patient support comprising a right side bladder having an interior region; a left side bladder having an interior region; and means for controlling the inflation of the right and left bladders.

In yet another exemplary embodiment of the present disclosure, a patient support is provided. The patient support comprising a plurality of bladders positioned to support a lower leg of a patient, each of the bladders including an interior region, and means for controlling a bleed rate of pressurized fluid from the interior region of at least one of the bladders.

In still another exemplary embodiment of the present disclosure, a patient support is provided. The patient support comprising a first plurality of bladders, each bladder having an interior region; a second plurality of bladders, each bladder having an interior region; and a valve assembly in fluid communication with the first plurality of bladders through a first set of ports and in fluid communication with the second plurality of bladders through a second set of ports, the valve assembly including a valve member that is moveable with respective to the first set of port and the second set of ports.

In an example thereof, a first bladder of the first plurality of bladders is in fluid communication with a first port of the first set of ports of the valve assembly, a first bladder of the second plurality of bladders is in fluid communication with a first port of the second set of ports of the valve assembly, a second bladder of the first plurality of bladders is in fluid communication with a second port of the first set of ports of the valve assembly, and a second bladder of the second plurality of bladders is in fluid communication with a second port of the second set of ports of the valve assembly, the valve member being moveable to a first position wherein the first port of the first set of ports receives air to inflate the first bladder of the first plurality of bladders and the first port of the second set of ports receives air to inflate the first bladder of the second plurality of bladders. In a variation thereof, the valve member is moveable moveable to a second position wherein the second port of the first set of ports receives air to inflate the second bladder of the first plurality of bladders and the second port of the second set of ports receives air to inflate the second bladder of the second plurality of bladders. In another variation thereof, in the second position of the valve member the first port of the first set of ports receives air to inflate the first bladder of the first plurality of bladders and the first port of the second set of ports receives air to inflate the first bladder of the second plurality of bladders. In a a refinement thereof, the valve member is moveable to a third position wherein the first port of the first set of ports receives air from the first bladder of the first plurality of bladders to deflate the first bladder of the first plurality of bladders and the first port of the second set of ports receives air from the first bladder of the second plurality of bladders to deflate the first bladder of the second plurality of bladders. In a further refinement thereof, the valve member is moveable to a third position wherein the first port of the first set of ports receives air from the first bladder of the first plurality of bladders to deflate the first bladder of the first plurality of bladders and the first port of the second set of ports receives air from the first bladder of the second plurality of bladders to deflate the first bladder of the second plurality of bladders. In still a further refinement thereof, in the third position of the valve member the second port of the first set of ports receives air from the second bladder of the first plurality of bladders to deflate the second bladder of the first plurality of bladders and the second port of the second set of ports receives air from the second bladder of the second plurality of bladders to deflate the second bladder of the second plurality of bladders.

In another example, the valve member is rotatable with respective to the first set of ports and the second set of ports. In a further example, the valve member includes a first elongated slot that is movable with respect to the first set of ports and a second elongated slot that is movable with respect to the second set of ports. In a variation thereof, the valve member is rotatable with respective to the first set of ports and the second set of ports.

While this disclosure includes particular examples, it is to be understood that the disclosure is not so limited. Numerous modifications, changes, variations, substitutions, and equivalents will occur to those skilled in the art without departing from the scope of the present disclosure upon a study of the drawings, the specification, and the following claims.

## Claims

1. A patient support, comprising:
a right side bladder (116) having an interior region;
a left side bladder (118) having an interior region; and
a valve assembly (112) in fluid communication with the interior regions of the right and left side bladders (116; 118), the valve assembly (112) having a plurality of positions to control the inflation of the right and left bladders; wherein the plurality of positions includes a first position with the right side bladder inflated and the left side bladder deflated, a second position with the left side bladder inflated and the right side bladder deflated, a third position with the left and right side bladders inflated, and a fourth position with the right side and left side bladders deflated;
wherein the patient support further comprises a right foot bladder (120) positioned to support a right lower leg of a patient, and a left foot bladder (122) positioned to support a left lower leg of a patient, wherein the right side bladder (116) is positioned to support a right side of a patient torso and the left side bladder (118) is positioned to support a left side of the patient torso, and the valve assembly (112) includes a fifth position that inflates the right and left side bladders (116; 118) and right and left foot bladders (120; 122) when in the fifth position; and
the valve assembly (112) deflates the right and left foot bladders when in the first, second, third, and fourth positions.

2. The patient support of claim 1, wherein:
the valve assembly (112) includes another position maintaining at least one of the inflated or deflated states of the right and left side bladders (116; 118) resulting from the valve assembly (112) previously being in at least one of the first, second, third, and fourth positions.

## Patentansprüche

1. Patientenstütze, Folgendes beinhaltend:
eine rechte Seitenblase (116), welche einen inneren Bereich besitzt;
eine linke Seitenblase (118), welche einen inneren Bereich besitzt; und
eine Ventilanordnung (112) in fluidischer Verbindung mit den inneren Bereichen der linken und der rechten Seitenblase (116; 118), wobei die Ventilanordnung (112) eine Vielzahl von Positionen zur Steuerung des Aufblasens der rechten und der linken Blase besitzt; wobei die Vielzahl von Positionen eine erste Position mit aufgeblasener rechter Seitenblase und abgelassener linker Seitenblase beinhaltet, eine zweite Position mit aufgeblasener linker Seitenblase und abgelassener rechter Seitenblase, eine dritte Position mit aufgeblasener linker und rechter Seitenblase und eine vierte Position mit abgelassener rechter und linker Seitenblase;
wobei die Patientenstütze zudem eine rechte Fußblase (120) beinhaltet, welche positioniert ist, um einen rechten Unterschenkel eines Patienten zu stützen, und eine linke Fußblase (122), welche positioniert ist, um einen linken Unterschenkel eines Patienten zu stützen, wobei die rechte Seitenblase (116) positioniert ist, um eine rechte Seite eines Patiententorsos zu stützen und die linke Seitenblase (118) positioniert ist, um eine linke Seite des Patiententorsos zu stützen, und die Ventilanordnung (112) eine fünfte Position umfasst, welche die rechte und die linke Seitenblase (116; 118) und die rechte und die linke Fußblase (120; 122) aufbläst, wenn sie sich in der fünften Position befindet; und
die Ventilanordnung (112) die rechte und die linke Fußblase ablässt, wenn sie sich in der ersten, zweiten, dritten und vierten Position befindet.

2. Patientenstütze nach Anspruch 1, bei welcher:
die Ventilanordnung (112) eine weitere Position umfasst, welche mindestens einen der Zustände der Gruppe hält, bestehend aus dem aufgeblasenen oder dem abgelassenen Zustand der rechten und der linken Seitenblase (116; 118), welcher daraus resultiert, dass sich die Ventilanordnung (112) zuvor in mindestens einer Position der Gruppe befunden hat, bestehend aus der ersten, der zweiten, der dritten und der vierten Position.

## Revendications

1. Support de patient, comprenant :
une vessie côté droit (116) ayant une région intérieure ;
une vessie côté gauche (118) ayant une région intérieure ; et
un ensemble valve (112) en communication fluidique avec les régions intérieures des vessie côtés droit et gauche (116 ; 118), l'ensemble valve (112) ayant une pluralité de positions pour commander le gonflement des vessies droite et gauche ; dans lequel la pluralité de position comportent une première position avec la vessie côté droit gonflée et la vessie côté gauche dégonflée, une deuxième position avec la vessie côté gauche gonflée et la vessie côté droit dégonflée, une troisième position avec les vessies côtés gauche et droit gonflées, et une quatrième position avec les vessies côtés droit et gauche dégonflées ;
dans lequel le support de patient comprend en outre une vessie pour pied droit (120) positionnée pour supporter un bas de jambe droite d'un patient, et une vessie pour pied gauche (122) positionnée pour supporter un bas de jambe gauche d'un patient, dans lequel la vessie côté droit (116) est positionnée pour supporter un côté droit d'un torse de patient et la vessie côté gauche (118) est positionnée pour supporter un côté gauche du torse de patient, et l'ensemble valve (112) comporte une cinquième position qui gonfle les vessies côtés droit et gauche (116 ; 118) et les vessies pour pieds droit et gauche (120 ; 122) lorsqu'elles sont dans la cinquième position ; et
l'ensemble valve (112) dégonfle les vessies pour pieds droit et gauche lorsqu'elles sont dans les première, deuxième, troisième et quatrième positions.

2. Support de patient selon la revendication 1, dans lequel :
l'ensemble valve (112) comporte une autre position maintenant au moins l'un des états gonflé ou dégonflé des vessies côtés droit et gauche (116 ; 118) résultant du fait que l'ensemble valve (112) était auparavant dans au moins une des première, deuxième, troisième et quatrième positions.
